# EUROPEAN PATENT SPECIFICATION

(11) **EP 2 017 482 B1**
(45) Date of publication and mention of the grant of the patent: **04.12.2013**
(21) Application number: 07742635.1
(22) Date of filing: 27.04.2007
(51) Int. Cl.: F15B 11/00, E02F 9/22, F02D 29/00, F02D 29/04

(54) **OVERLOAD PREVENTION DEVICE FOR CONSTRUCTION MACHINE**
ÜBERLASTUNGSSCHUTZVORRICHTUNG FÜR BAUMASCHINE
Dispositif de prévention de surcharge pour une machine de CONSTRUCTION

(30) Priority: 10.05.2006 JP 2006131975
(43) Date of publication of application: 21.01.2009
(73) Proprietor: Sumitomo (S.H.I.) Construction Machinery Co., Ltd., Shinagawa-ku Tokyo 141-6025 (JP)
(72) Inventor: TSUKAMOTO, Hiroyuki, Chiba-shi, Chiba 263-0001 (JP); NISHI, Takashi, Chiba-shi, Chiba 263-0001 (JP)
(74) Representative: Wagner, Karl H.
(86) International application number: PCT/JP2007/059200
(87) International publication number: WO 2007/129613

(56) References cited:
- JP-A- 02 153 236
- JP-A- 05 312 082
- JP-A- 2000 161 302
- JP-A- 2001 271 677
- JP-A- 2001 271 677
- JP-A- 2003 138 957
- JP-A- 2004 162 816
- JP-A- 2005 076 670
- US-A- 5 743 089

## Description

### TECHNICAL FIELD

This invention generally relates to an over-loading prevention device of construction machinery, and more particularly to an over-loading prevention device of construction machinery which is capable of reducing the fuel consumption for all the construction operations in construction machinery, such as a hydraulic excavator, using an internal-combustion engine as its drive source.

### BACKGROUND ART

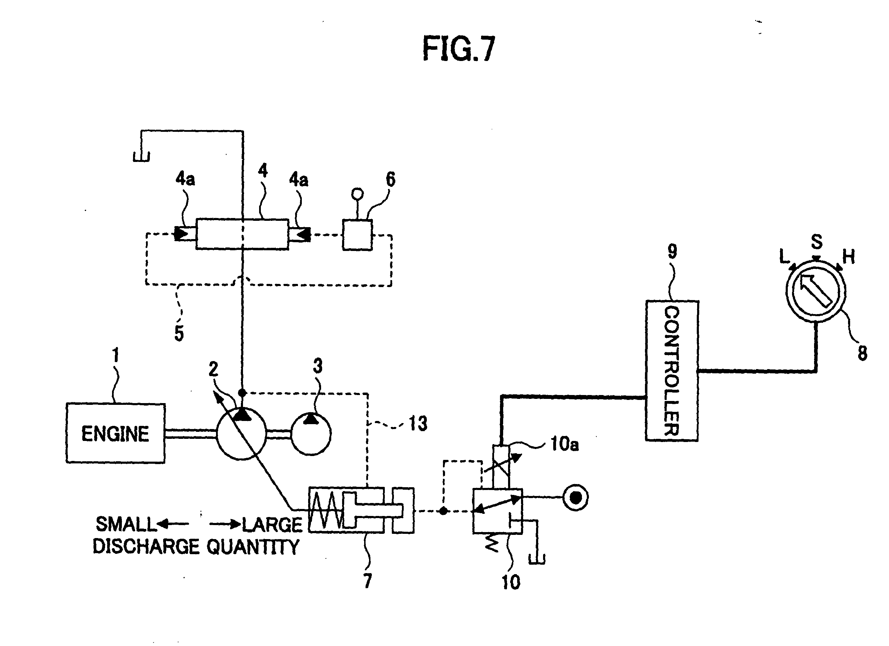

There is known a hydraulic-pump driving system controlling device as shown in FIG. 7, which is a conventional over-loading prevention device of construction machinery.

In the hydraulic-pump driving system controlling device of FIG. 7, a variable-capacity hydraulic pump (main pump) 2 which is driven by an engine (internal-combustion engine) 1, and a pilot pump 3 are provided. A discharge outlet of the variable capacity hydraulic pump 2 communicates with a control valve 4 which controls supply and exhaust of hydraulic pressure from the variable capacity hydraulic pump 2 to a hydraulic actuator which is not illustrated.

In the hydraulic-pump driving system controlling device of FIG. 7, pilot ports 4a which are provided at both ends of the control valve 4 respectively communicate with a pilot-pressure discharge outlet of a control lever 6 via a pilot-pressure introducing line 5. A pilot pressure from the pilot pump 3 is introduced into the control lever 6 via the line which is not illustrated, and the introduced pressure is used as a pilot pressure to operate the control valve 4.

Moreover, the discharge outlet of the variable capacity hydraulic pump 2 communicates with a hydraulic pressure inlet of a regulator (discharge-quantity control unit) 7 via a line 13. The variable capacity hydraulic pump 2 supplies a discharge pressure to the regulator 7 to decrease the discharge quantity in proportion to an increase in the discharge pressure. Thus, the variable capacity hydraulic pump 2 is operated by performing a constant-torque control (or constant-horsepower control) which controls the input torque uniformly so that the input torque may not exceed an engine torque.

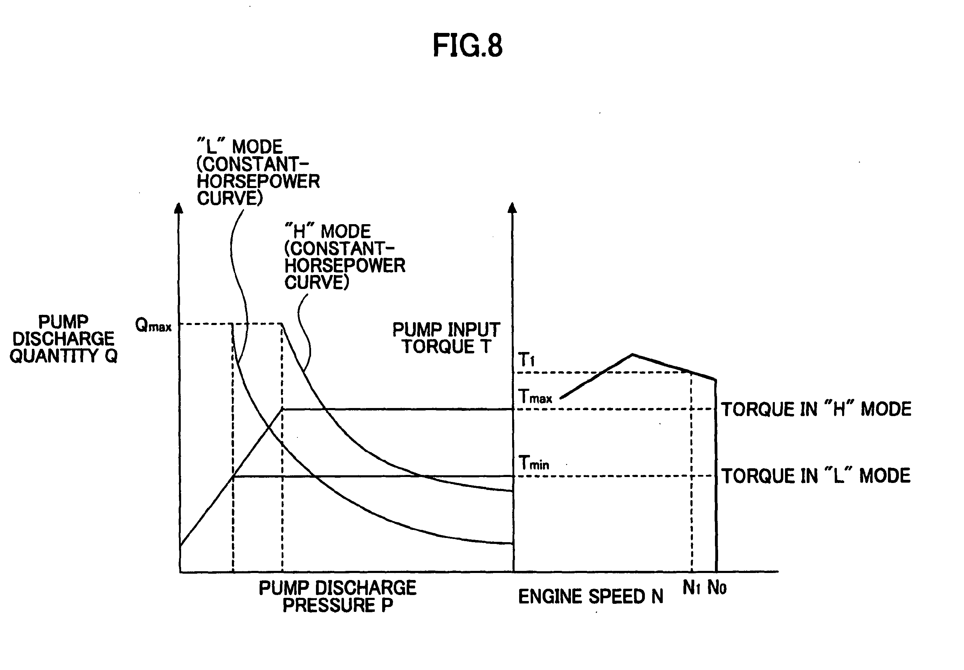

Moreover, the variable capacity hydraulic pump 2 is operated by performing a flow control which increases or decreases the discharge quantity in accordance with the control input of the control lever 6. FIG. 8 shows the constant-horsepower control which is performed in the hydraulic-pump driving system controlling device of FIG. 7, and the constant-horsepower curves (in H mode and L-mode) are indicated.

If a hydraulic excavator including a hydraulic actuator is considered as a typical construction machinery, various construction operations, including heavy-load digging, light-load digging, finishing, etc. are performed using the hydraulic excavator.

In order to control the input torque of the variable capacity hydraulic pump 2 so that an optimal input torque for one of the various construction operations may be selected, the hydraulic-pump driving system controlling device of FIG. 7 is provided with a mode selector switch 8, a controller (control unit) 9, and an electromagnetic inverse-proportion valve (input torque control unit) 10. The mode selector switch 8 outputs an external signal. The controller 9 receives this external signal from the mode selector switch 8 and outputs a torque setting signal. The electromagnetic inverse-proportion valve 10 receives this torque setting signal from the controller 9 and outputs a secondary pressure Pf.

The mode selector switch 8, the controller 9, and the electromagnetic inverse-proportion valve 10 mentioned above constitute an operation-mode selector circuit. The secondary pressure Pf from the electromagnetic inverse-proportion valve 10 is supplied to the regulator 7, and as shown in FIG. 8, the input torque of the variable capacity hydraulic pump 2 is changed between Tmax and Tmin, and the input torque is set to an input torque value between Tmax and Tmin according to the level of the external signal from the mode selector switch 8.

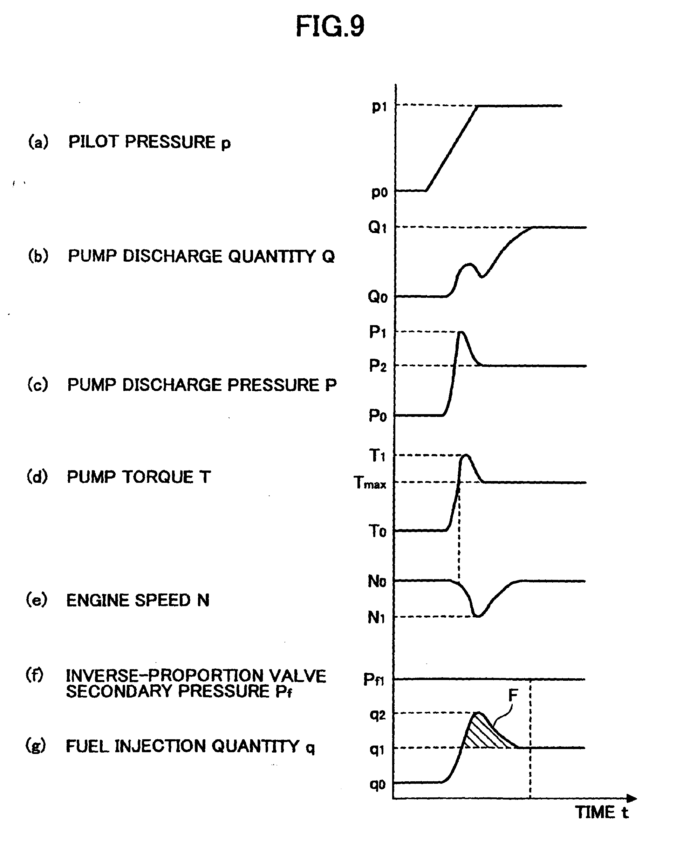

FIG. 9 is a time chart for explaining the respective characteristics of the parts of the hydraulic-pump driving system controlling device of FIG. 7 when usual digging is performed using a hydraulic excavator as construction machinery and the constant-horsepower control is set in the H mode.

If sudden actuation of the control lever 6 is performed as shown in FIG. 9 (a) and (b), the discharge quantity Q of the variable capacity hydraulic pump 2 begins to increase. Simultaneously, in order to operate the hydraulic actuator, starting pressure occurs, and the discharge pressure P of the variable capacity hydraulic pump 2 increases rapidly to P1 (see FIG. 9 (c)).

When the constant-horsepower control is set in the H mode, in order to control uniformly the input torque of the variable capacity hydraulic pump 2, the secondary pressure Pf of the electromagnetic inverse-proportion valve 10 is set to the predetermined value Pf1 (see FIG. 9 (f)).

Since the constant-horsepower control set in the H mode cannot respond to the sudden rise to the discharge pressure P1 at this time, while the discharge pressure P of the variable capacity hydraulic pump 2 increases quickly, the input torque T of the variable capacity hydraulic pump 2 exceeds the torque when the engine speed N is at the nominal-speed N0, and it is set to T1 (see FIG. 9 (d)).

As a result, the engine speed N of the engine 1 falls to the engine speed N1 at which the torque is balanced, and the pump discharge quantity Q temporarily falls with this lowering (lag down) of the engine speed (see FIG. 9 (e) and (b)).

Once the hydraulic actuator operates, the sliding state of the respective parts changes from static friction to dynamic friction and the pump discharge pressure P falls to P2. The input torque T of the variable capacity hydraulic pump 2 also falls to Tmax and the pump discharge quantity Q increases to Q1, thereby returning to the control state of the constant-horsepower control.

However, while the engine speed is falling, controlling the engine 1 to increase the fuel injection quantity is performed in order to return the engine-speed N to the nominal speed N0. As shown in FIG. 9 (e) and (g), the control to increase the lowered engine-speed N back to the nominal speed N0 is performed by increasing the fuel injection quantity q of the engine 1 from q1 to q2 at the time of lowering of the engine speed. By increasing the fuel injection quantity q from q1 to q2, the fuel injection quantity equivalent to the shaded portion F indicated in FIG. 9 (g) will be a cause of increase in the fuel consumption of the engine 1.

For example, JP 2005-76670A discloses an engine lag-down prevention device of construction machinery which is known as a conventional over-loading prevention device of construction machinery. This engine lag-down prevention device includes a main pump which is driven by an engine, a torque control valve which adjusts a maximum pump torque of the main pump, a hydraulic actuator which is driven by a hydraulic pressure supplied from the main pump, and an operation device which operates the hydraulic actuator.

Moreover, in the engine lag-down prevention device, a torque control unit is arranged. This torque control unit is arranged to control the torque control valve to gradually increase the hydraulic pump torque based on a predetermined torque increasing rate with the progress of time from the end of a predetermined torque holding time for which the low pump torque is held, immediately after the operation device is operated from the non-operating state.

Since the engine lag-down prevention device of JP 2005-76670A is arranged so that the hydraulic-pump torque is increased gradually by the torque control unit, the load acting on the engine can be reduced even after the end of the predetermined torque holding time. Accordingly, the engine lag-down after the end of the predetermined torque holding time can be reduced to a small amount.

US 5,743,089 A discloses a control valve in a line between a variable displacement hydraulic pump and a hydraulic cylinder. The control valve controls flow rate of working fluid supplied to the hydraulic cylinder according to a manipulated variable of a lever. The control increases a discharge of the hydraulic pump in association with the increase in the manipulated variable and also controls to suppress the discharge as the discharge pressure of the hydraulic pump increases. A proper response corresponding to the operator's feeling can be realized in consideration of an actual pressure loaded on an actuator on the basis of a positive control system.

JP 2001-271677 A discloses an engine control device for a construction machine. In order to prevent rapid lowering of engine speed, when the operation of a hydraulic actuator of a construction machine is started, and prevent deterioration of fuel consumption and exhaust gas, an engine control device for construction machine is provided in which a main pump driven by an engine, an oil path of the main pump is connected to a control valve of the hydraulic actuator and the engine is constituted, so that fuel flow rate may be controlled by a command signal from a controller, a pressure switch connected with the controller is provided on a pilot oil path of the control valve, the main pump is constituted as a variable pump torque-controlled by an electromagnetic proportional valve connected to the controller, the main pump is set to prescribed low torque at non-operation time of the hydraulic actuator and a set torque of the main pump is changed from the prescribed low torque to prescribed high torque in prescribed time, when the start of the operation of the hydraulic actuator is detected by the pressure switch.

### DISCLOSURE OF THE INVENTION

### PROBLEM TO BE SOLVED BY THE INVENTION

However, in the hydraulic-pump driving system controlling device of FIG. 7, when sudden actuation of the control lever is performed, the discharge pressure of the variable capacity hydraulic pump is increased abruptly. And the input torque of the variable capacity hydraulic pump is increased in the process of the sudden rise of the discharge pressure so that the increased input torque exceeds the torque when the engine speed is at the nominal speed.

As a result, the engine lag down occurs to the engine speed at which the torque is balanced. When the engine lag-down occurs, controlling the engine to suddenly increasing the fuel injection quantity is performed in order for returning the engine speed back to the nominal speed, thereby worsening the fuel consumption of the engine.

Since the discharge quantity is temporarily reduced by the engine lag-down, the discharging speed of the hydraulic actuator is changed which casts the adverse effect on the ease of operation of the variable capacity hydraulic pump.

The engine lag-down prevention device of JP 2005-76670 A is arranged so that the pump torque is increased gradually by the above-mentioned torque control unit, and an engine lag-down after the progress of the predetermined torque holding time may be reduced to a small amount. However, since the engine lag-down does occur even if it is reduced to a small amount, the increase in the fuel injection quantity is unavoidable.

In view of the above-mentioned problems, according to one aspect of the invention, there is disclosed an over-loading prevention device of construction machinery which prevents occurrence of an engine lag-down at the time of a sudden rise of the discharge pressure of the hydraulic pump and prevents rapid increase of the engine fuel injection quantity, so that the fuel consumption for all the construction operations in construction machinery may be reduced and the ease of operation of the hydraulic actuator may be improved.

### MEANS FOR SOLVING THE PROBLEM

In order to achieve the above-mentioned aspect, the invention provides a over-loading prevention device of construction machinery as set forth in claim 1 or 4.

The above-mentioned over-loading prevention device may be arranged so that the predetermined control pattern used by the control unit is selected from among a first control pattern that causes the level of the control signal to be returned to a level equivalent to the maximum torque value within a predetermined time, a second control pattern that causes the level of the control signal to be gradually returned by a number of increments of an arbitrary amount to a level equivalent to the maximum torque value when an engine speed of the engine is within a range of a given engine speed to a target engine speed, and a third control pattern that causes the level of the control signal to be temporarily returned to an arbitrary level within a predetermined time and subsequently causes the level of the control signal to be gradually returned by a number of increments of an arbitrary amount to a level equivalent to the maximum torque value when an engine speed of the engine is within a range of a given engine speed to a target engine speed.

The above-mentioned over-loading prevention device may be arranged so that the hydraulic pump is constituted by a variable capacity hydraulic pump, and the operation-state detection unit is constituted by a pressure sensor connected to the control lever.

### EFFECTS OF THE INVENTION

According to the invention, even if sudden actuation of the control lever is performed and the discharge pressure of the hydraulic pump is increased abruptly, the over-loading prevention device is controlled so that the input torque of the hydraulic pump does not exceed the engine torque. An engine lag-down in which the engine speed falls does not occur and rapid increase of the fuel injection quantity of the internal-combustion engine can be prevented. Thus, the fuel consumption for all the construction operations in the construction machinery can be reduced. Since an engine lag-down does not occur, the phenomenon in which the discharge quantity of the hydraulic pump temporarily falls does not occur, and the ease of operation of the hydraulic actuator which operates with the hydraulic pressure supplied from a hydraulic pump can be improved.

According to the invention, in the controlled state in which the input torque of the variable capacity hydraulic pump does not exceed the engine torque, an arbitrary control pattern processing in which the level of a control signal is returned within a predetermined time to a level that the input torque of the variable capacity hydraulic pump is held constant may be performed. This makes it possible to return the input torque of the variable capacity hydraulic pump to the previously controlled state before sudden actuation of the control lever.

### BRIEF DESCRIPTION OF THE DRAWINGS

FIG. 1 is a diagram showing the hydraulic circuit of an over-loading prevention device of construction machinery in an embodiment of the invention.
FIG. 2 is a diagram for explaining the torque characteristic showing the relationship between a secondary pressure of an electromagnetic inverse-proportion valve and a pump input torque in the embodiment of FIG. 1.
FIG. 3 is a time chart for explaining the respective characteristics of the embodiment of FIG. 1.
FIG. 4 is a diagram showing the hydraulic circuit of an over-loading prevention device of construction machinery in an embodiment of the invention.
FIG. 5 is a diagram for explaining the torque characteristic showing the relationship between a secondary pressure of an electromagnetic inverse-proportion valve and a pump input torque in the embodiment of FIG. 4.
FIG. 6 is a time chart for explaining the respective characteristics of the embodiment of FIG. 4.
FIG. 7 is a diagram showing the hydraulic circuit of a conventional hydraulic-pump driving system controlling device of construction machinery.
FIG. 8 is a diagram for explaining a constant-horsepower control in the hydraulic-pump driving system controlling device of FIG. 7 and the relationship between an engine speed and a pump input torque.
FIG. 9 is a time chart for explaining the respective characteristics of the hydraulic-pump driving system controlling device of FIG. 7.

### BEST MODE FOR CARRYING OUT THE INVENTION

A description will now be given of embodiments of the invention with reference to the accompanying drawings.

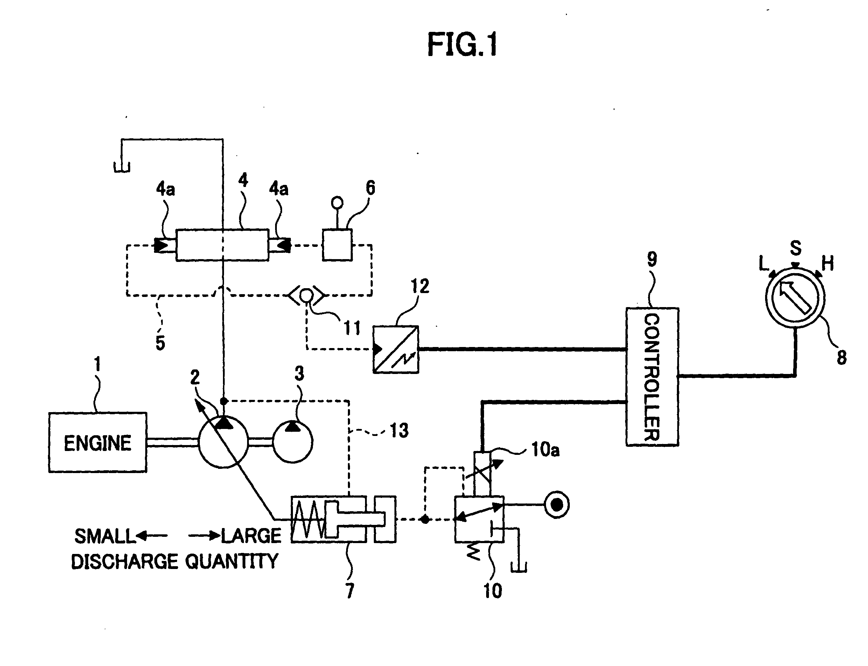

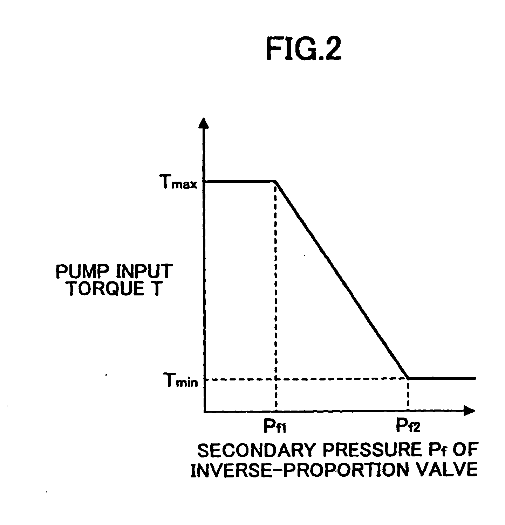

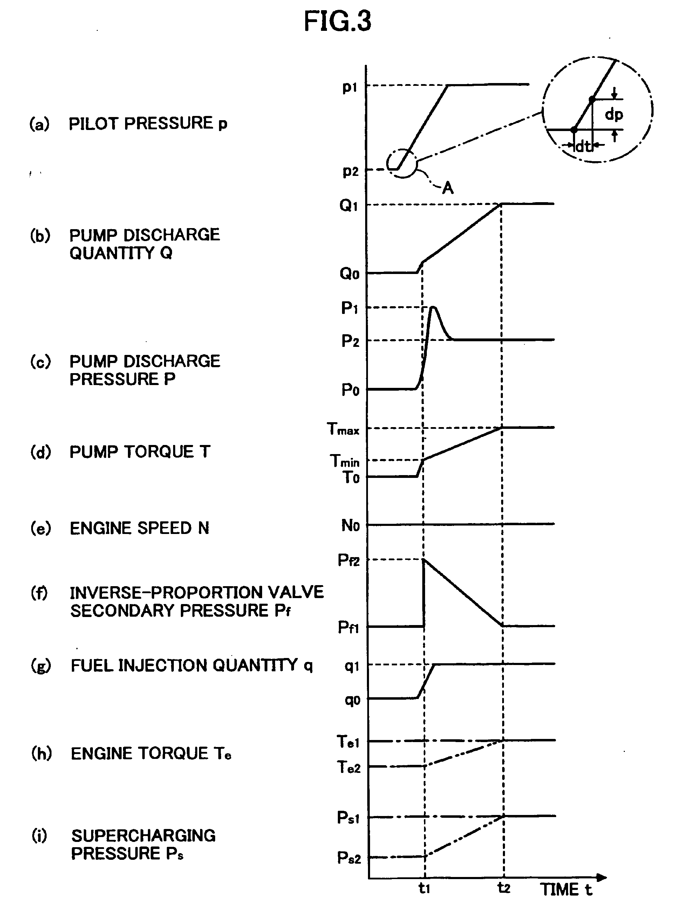

FIG. 1 shows the hydraulic circuit of an over-loading prevention device of construction machinery in an embodiment of the invention. FIG. 2 is a diagram for explaining a torque characteristic showing the relationship between a secondary pressure of an electromagnetic inverse-proportion valve and a pump input torque in the embodiment of FIG. 1. FIG. 3 is a time chart for explaining the respective characteristics of the embodiment of FIG. 1.

In FIG. 1, the elements that are the same as corresponding elements in FIG. 7 are designated by the same reference numerals, and a description thereof will be omitted.

As mentioned above, in order to prevent occurrence of an engine lag-down at the time of a sudden rise of the discharge pressure of the hydraulic pump and prevent rapid increase of the engine fuel injection quantity, so as to reduce the fuel consumption for all the construction operations in construction machinery and improve the ease of operation of the hydraulic actuator, the over-loading prevention device of the construction machinery of this embodiment is provided as set forth in claim 1.

In the over-loading prevention device of FIG. 1, a shuttle valve 11 is arranged in the pilot pressure introducing line 5 for introducing the pilot pressure from the control lever 6 into the pilot ports 4a and 4a of the control valve 4. The pilot pressure inputted to either of the pilot ports 4a and 4a is taken out by the shuttle valve 11, and this pilot pressure is supplied to a pressure sensor 12.

The discharge outlet of the variable capacity hydraulic pump 2 communicates with the hydraulic pressure inlet of the regulator (discharge-quantity control unit) 7 via the line 13. The variable capacity hydraulic pump 2 supplies a discharge pressure to the regulator 7 to decrease the discharge quantity in proportion to an increase in the discharge pressure. Thus, the variable capacity hydraulic pump 2 is operated by performing a constant-torque control (or constant-horsepower control) which controls uniformly the input torque of the variable capacity hydraulic pump 2, so that the input torque may not exceed an engine torque.

The pressure sensor 12 detects a pressure value of the pilot pressure and outputs a pilot pressure detection signal. The operation state detection unit which detects the actuation state of the control lever 6 is constituted by the pressure sensor 12 which is connected to the control lever 6 via the shuttle valve 11.

The pilot pressure detection signal of the pressure sensor 12 is outputted to the controller 9. The controller 9 computes an increase gradient dp/dt (see the enlarged diagram A in FIG. 3 (a)) of the pilot pressure based on the received pilot pressure detection signal, and determines whether the control lever 6 is operated over a predetermined speed based on the computed value of the increase gradient dp/dt.

When it is determined that the control lever 6 is operated over the predetermined speed, the controller 9 outputs a predetermined current signal, and this predetermined current signal is inputted to the actuator 10a of the electromagnetic inverse-proportion valve 10.

In response to the predetermined current signal, the electromagnetic inverse-proportion valve 10 outputs a control signal which decreases the input torque of the variable capacity hydraulic pump 2 to a predetermined value, and this control signal is inputted to the regulator 7 which is the discharge-quantity control unit.

Next, operation of the over-loading prevention device of FIG. 1 will be explained with reference to FIG. 2 and FIG. 3.

When sudden actuation of the control lever 6 is not performed and increase of the pilot pressure is mild, the discharge pressure P of the variable capacity hydraulic pump 2 rises gently. At this time, the constant-horsepower control in the variable capacity hydraulic pump 2 follows the mild increase of the discharge pressure P, and the input torque T of the variable capacity hydraulic pump 2 does not exceed an engine torque. Therefore, an engine lag-down does not occur and the fuel injection of the engine 1 is performed normally.

On the other hand, when sudden actuation of the control lever 6 is performed, the starting pressure for operating the hydraulic actuator occurs. As shown in FIG. 3 (c), the discharge pressure P of the variable capacity hydraulic pump 2 rises to P1 rapidly. At this time, a sudden rise of the pilot pressure accompanied with the sudden actuation of the control lever 6 is detected by the pressure sensor 12 through the shuttle valve 11, and the pilot pressure detection signal of the pressure sensor 12 is outputted to the controller 9.

The controller 9 detects that the increase gradient dp/dt of the pilot pressure is over a predetermined value "a" (dp/dt ≧ "a"), and determines that the control lever 6 is operated over the predetermined speed (refer to FIG. 3 (a)). The controller 9 outputs a predetermined current signal to the actuator 10a of the electromagnetic inverse-proportion valve 10 based on the result of this judgment.

The electromagnetic inverse-proportion valve 10 receives the predetermined current signal. And as shown in FIG. 2 and FIG. 3, the electromagnetic inverse-proportion valve 10 outputs the secondary pressure Pf2 which is a control signal that sets the input torque T of the variable capacity hydraulic pump 2 to the minimum torque value Tmin according to the constant-torque control (refer to FIG. 3 (d) and (f)). The secondary pressure Pf2 of the electromagnetic inverse-proportion valve 10 is supplied to the regulator 7. As a result, even if the discharge pressure P is increased abruptly as mentioned above, increasing of the discharge quantity Q is suppressed, and the variable capacity hydraulic pump 2 is controlled so that the input torque T does not exceed an engine torque (refer to FIG. 3 (b), (c) and (d)).

Up to the instant t2, after a predetermined time has passed from the instant t1 the secondary pressure Pf2 is outputted by the electromagnetic inverse-proportion valve 10, the controller 9 changes the signal level of the secondary pressure Pf outputted by the electromagnetic inverse-proportion valve 10, from the secondary pressure Pf2 which is equivalent to the minimum torque value Tmin according to the constant-torque control of the variable capacity hydraulic pump 2, to the secondary pressure Pf1 which is equivalent to the maximum torque value Tmax according to the constant-torque control, in accordance with a predetermined control pattern.

By changing the secondary pressure Pf outputted by the electromagnetic inverse-proportion valve 10, the input torque T of the variable capacity hydraulic pump 2 is increased to the maximum torque value Tmax according to the constant-torque control.

The predetermined control pattern which is used by the controller 9 in order to change the signal level of the secondary pressure Pf of the electromagnetic inverse-proportion valve 10 is selected from among the following ones:
(1) a first control pattern that causes the signal level of the secondary pressure Pf of the electromagnetic inverse-proportion valve 10 to be returned within a predetermined time to the level equivalent to the maximum torque value Tmax according to the constant-torque control of the variable capacity hydraulic pump 2;
(2) a second control pattern that causes the signal level of the secondary pressure Pf of the electromagnetic inverse-proportion valve 10 to be returned by a number of increments of an arbitrary amount to the level equivalent to the maximum torque value Tmax according to the constant-torque control of the variable capacity hydraulic pump 2 when the engine speed of the engine 1 is within a range of a predetermined engine speed to a target engine speed; and
(3) a third control pattern that causes the signal level of the secondary pressure Pf of the electromagnetic inverse-proportion valve 10 to be temporarily returned to an arbitrary level within a predetermined time, and subsequently causes the signal level of the secondary pressure Pf of the electromagnetic inverse-proportion valve 10 to be gradually returned by a number of increments of an arbitrary amount to the level equivalent to the maximum torque value Tmax according to the constant-torque control of the variable capacity hydraulic pump 2 when the engine speed of the engine 1 is within a predetermined engine speed to a target engine speed.

As described above, in the over-loading prevention device of this embodiment, the control is carried out so that the input torque T of the variable capacity hydraulic pump 2 does not exceed the engine torque, even if sudden actuation of the control lever 6 is performed and the discharge pressure P of the variable capacity hydraulic pump 2 is increased abruptly. Occurrence of an engine lag-down in which the engine speed of the engine 1 falls temporarily can be prevented, and rapid increase of the fuel injection quantity of the engine 1 can be prevented (refer to FIG. 3 (e) and (g)). Therefore, the fuel consumption for all the construction operations in construction machinery can be reduced.

Since the engine lag-down does not occur, the phenomenon in which the discharge quantity Q of the variable capacity hydraulic pump 2 falls temporarily does not occur, and the ease of operation of the hydraulic actuator which operates by the hydraulic pressure supplied from the variable capacity hydraulic pump 2 can be improved.

In the controlled condition in which the input torque T of the variable capacity hydraulic pump 2 does not exceed the engine torque, the control pattern processing is performed in which the signal level of the secondary pressure Pf of the electromagnetic inverse-proportion valve 10 is also returned within a predetermined time to the level equivalent to the maximum torque value Tmax according to the constant-torque control of the variable capacity hydraulic pump 2. Thus, the input torque T of the variable capacity hydraulic pump 2 can be returned to the controlled condition before sudden actuation of the control lever 6.

Next, a description will be given of another embodiment of the invention.

The case in which an internal combustion engine having a supercharger is used for a drive system of construction machinery, such as a hydraulic excavator, is taken into consideration. In this case, regardless of whether the supercharging pressure is adequate or inadequate, it is desirable that, when the pilot pressure is increased rapidly according to the digging state or the actuation state, occurrence of an engine lag-down be prevented and the fuel consumption be reduced without worsening the ease of operation of the hydraulic actuator, similar to the previously described embodiment.

In the case of the internal combustion engine having a supercharger used for the drive system of construction machinery, when the construction machinery is in a heavy-load state during operation of the construction machinery, or at the time of restart of the operation promptly after the operation stop, etc., an adequately high supercharging pressure Ps1 is obtained as the engine supercharging pressure Ps as indicated by the one-dot chain line in FIG. 3 (i).

On the other hand, when the construction machinery is in the non-operation condition (unloaded condition), the engine supercharging pressure Ps is set to a comparatively low supercharging pressure Ps2 as indicated by the two-dot chain line in FIG. 3 (i). In this condition, an adequately large output torque of the engine is not obtained. When the supercharging pressure Ps is set to Ps1, a sufficiently large torque Te1 is obtained as the supercharged engine torque Te as indicated by the two-dot chain line in FIG. 3 (h). When the supercharging pressure Ps is set to Ps2, a comparatively small torque Te2 is obtained as the supercharged engine torque Te as indicated by the one-dot chain line in FIG. 3 (h).

However, in the conventional hydraulic-pump driving system controlling device, regardless of whether the engine is in the heavy-load condition or in the unloaded condition, the same control is carried out. That is, when the supercharged engine torque Te is set to Te1, the input torque of the hydraulic pump is held down at the low level that is the same as when the supercharged engine torque Te is set to Te2, although a larger amount of work may be obtained by setting the input torque of the hydraulic pump to a larger value. This may cause the ease of operation to worsen, e.g., the acceleration of the hydraulic actuator being not responsive to operation.

In order to solve the above-mentioned problem, the over-loading prevention device of construction machinery in the following embodiment is provided as set forth in claim 4.

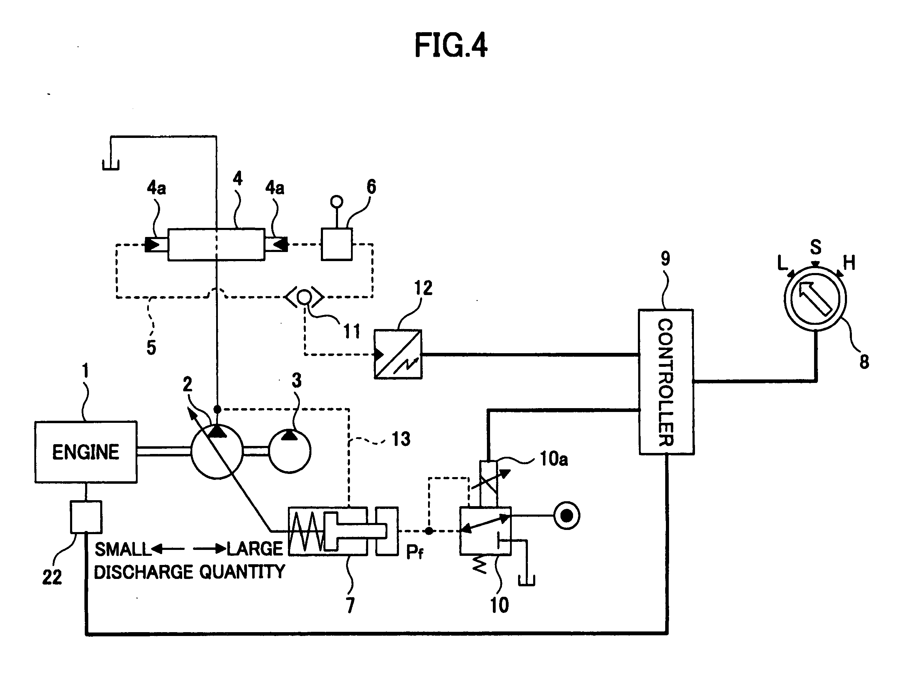

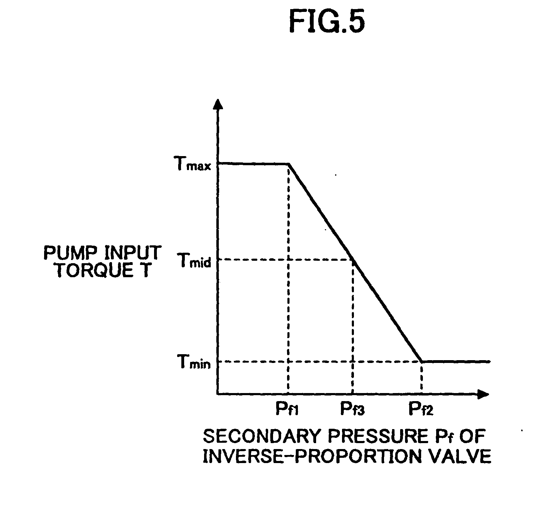

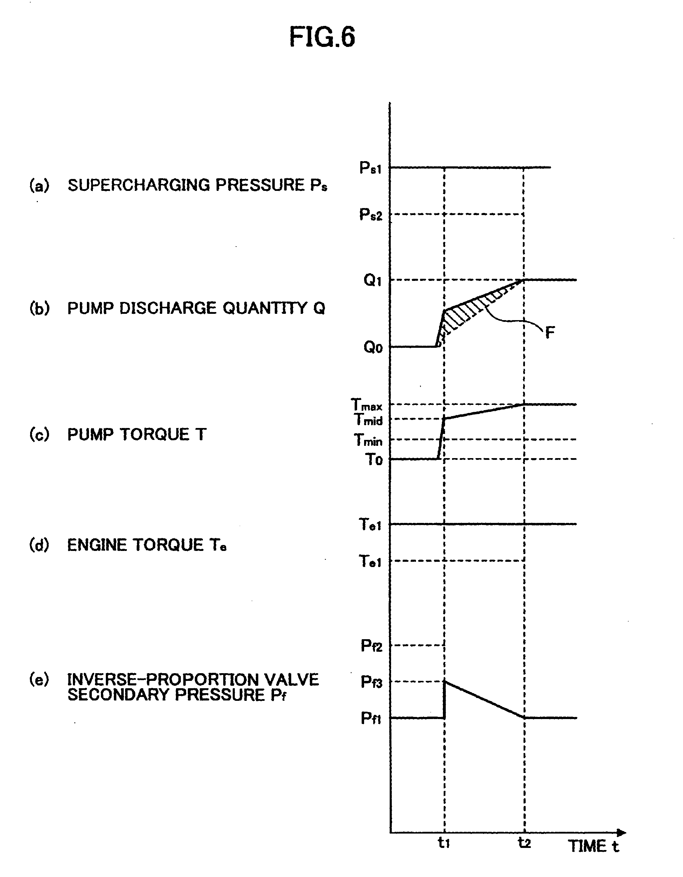

FIG. 4 is a diagram showing the hydraulic circuit of an over-loading prevention device of construction machinery in an embodiment of the invention. FIG. 5 is a diagram for explaining the torque characteristics showing the relationship between a secondary pressure of an electromagnetic inverse-proportion valve and a pump input torque in the embodiment of FIG. 4. FIG. 6 is a time chart for explaining the respective characteristics of the embodiment of FIG. 4.

In FIG. 4, the elements which are the same as corresponding elements in FIG. 1 are designated by the same reference numerals, and a description thereof will be omitted.

In the over-loading prevention device of FIG. 4, a supercharging pressure sensor 22 is attached to an engine 1 having a supercharger, and this supercharging pressure sensor 22 detects a supercharging pressure which is supplied to the engine 1 during operation, and outputs a supercharging pressure detection signal to the controller 9. A shuttle valve 11 is arranged in the pilot pressure introducing line 5 for introducing the pilot pressure from the control lever 6 into the pilot ports 4a and 4a of the control valve 4. The pilot pressure inputted to either of the pilot ports 4a and 4a is taken out by the shuttle valve 11, and this pilot pressure is supplied to a pressure sensor 12.

The discharge outlet of the variable capacity hydraulic pump 2 communicates with the hydraulic pressure inlet of the regulator (discharge-quantity control unit) 7 via the line 13. The variable capacity hydraulic pump 2 supplies a discharge pressure to the regulator 7 to decrease the discharge quantity in proportion to an increase in the discharge pressure. Thus, the variable capacity hydraulic pump 2 is operated by performing a constant-torque control (or constant-horsepower control) which controls uniformly the input torque of the variable capacity hydraulic pump 2, so that the input torque may not exceed an engine torque.

The pressure sensor 12 detects a pressure value of the pilot pressure and outputs a pilot pressure detection signal. The operation state detection unit which detects the actuation state of control lever 6 is constituted by the pressure sensor 12 which is connected to the control lever 6 via the shuttle valve 11.

The pilot pressure detection signal of the pressure sensor 12 is outputted to the controller 9. The controller 9 computes an increase gradient dp/dt (see the enlarged diagram A in FIG. 3 (a)) of the pilot pressure based on the received pilot pressure detection signal, and determines whether the control lever 6 is operated over a predetermined speed based on the computed value of the increase gradient dp/dt.

When it is determined that the control lever 6 is operated over the predetermined speed, the controller 9 outputs a predetermined current signal, and this predetermined current signal is inputted into the actuator 10a of the electromagnetic inverse-proportion valve 10.

In response to the predetermined current signal, the electromagnetic inverse-proportion valve 10 outputs a control signal which decreases the input torque of the variable capacity hydraulic pump 2 to a predetermined value, and this control signal is inputted to the regulator 7 which is the discharge-quantity control unit.

The controller 9 in the over-loading prevention device of FIG. 4 computes beforehand a supercharged engine torque Te of the engine 1 according to the supercharging pressure detection value based on the supercharging pressure detection signals received from the supercharging pressure sensor 22 in various operating states of the engine 1.

For example, as shown in FIG. 6 (a) and (d), when the supercharging pressure Ps in a heavy-load state is set to Ps1, the supercharged engine torque Te of the engine 1 is computed as being a sufficiently large torque value Te1. Similarly, when the supercharging pressure Ps in an unloaded condition is set to Ps2, the supercharged engine torque Te is computed as being a comparatively small torque value Te2 (Ps1>Ps2, Te1>Te2).

Next, operation of the over-loading prevention device of FIG. 4 will be explained with reference to FIG. 5 and FIG. 6.

When sudden actuation of the control lever 6 is not performed and increase of the pilot pressure is mild, the discharge pressure P of the variable capacity hydraulic pump 2 rises gently. At this time, the constant-horsepower control in the variable capacity hydraulic pump 2 follows the mild increase of the discharge pressure P, and the input torque T of the variable capacity hydraulic pump 2 does not exceed an engine torque. Therefore, an engine lag-down does not occur and the fuel injection of the engine 1 is performed normally.

On the other hand, when sudden actuation of the control lever 6 is performed, the controller 9 detects that the increase gradient dp/dt of the pilot pressure which is indicated by the pilot pressure detection signal of the pressure sensor 12 is over a predetermined value "a" (dp/dt ≧ "a"), and determines that the control lever 6 is operated over the predetermined speed. The controller 9 outputs a predetermined current signal to the actuator 10a of the electromagnetic inverse-proportion valve 10 based on the result of this judgment.

The electromagnetic inverse-proportion valve 10 receives the predetermined current signal. And as shown in FIG. 5 and FIG. 6, the electromagnetic inverse-proportion valve 10 outputs the secondary pressure Pf3 which is a control signal which sets the input torque T of the variable capacity hydraulic pump 2 to an arbitrary intermediate torque value Tmid between the maximum torque value Tmax and the minimum torque value Tmin according to the constant-torque control (refer to FIG. 6 (c) and (e)).

The secondary pressure Pf3 of the electromagnetic inverse-proportion valve 10 is supplied to the regulator 7. As a result, the variable capacity hydraulic pump 2 is controlled so that, even if the discharge pressure P is increased abruptly, increase of the discharge quantity Q is suppressed and the input torque T does not exceed an engine torque, similar to the embodiment of FIG. 1. Moreover, when the supercharged engine torque Te of the engine 1 is set to a sufficiently large torque value Te1, the discharge quantity Q of the hydraulic pump which is larger than in the case of the embodiment of FIG. 1 is obtained as indicated by the shaded portion F in FIG. 6 (b). It is possible to make the acceleration of the hydraulic actuator responsive to operation.

Up to the instant t2, after a predetermined time has passed from the instant t1 the secondary pressure Pf3 is outputted by the electromagnetic inverse-proportion valve 10, the controller 9 changes the signal level of the secondary pressure Pf outputted by the electromagnetic inverse-proportion valve 10, from the secondary pressure Pf3 equivalent to the intermediate torque value Tmid between the maximum torque value Tmax and the minimum torque value Tmin according to the constant-torque control of the variable capacity hydraulic pump 2, to the secondary pressure Pf1 equivalent to the maximum torque value Tmax according to the constant-torque control, in accordance with a predetermined control pattern.

By changing the secondary pressure Pf outputted by the electromagnetic inverse-proportion valve 10, the input torque T of the variable capacity hydraulic pump 2 is increased to the maximum torque value Tmax according to the constant-torque control.

Similar to the embodiment of FIG. 1, the predetermined control pattern which is used by the controller 9 in the embodiment of FIG. 4 in order to change the signal level of the secondary pressure Pf of the electromagnetic inverse-proportion valve 10 is selected from among the following ones:
(1) a first control pattern that causes the signal level of the secondary pressure Pf of the electromagnetic inverse-proportion valve 10 to be returned within a predetermined time to the level equivalent to the maximum torque value Tmax according to the constant-torque control of the variable capacity hydraulic pump 2;
(2) a second control pattern that causes the signal level of the secondary pressure Pf of the electromagnetic inverse-proportion valve 10 to be returned by a number of increments of an arbitrary amount to the level equivalent to the maximum torque value Tmax according to the constant-torque control of the variable capacity hydraulic pump 2 when the engine speed of the engine 1 is within a range of a predetermined engine speed to a target engine speed; and
(3) a third control pattern that causes the signal level of the secondary pressure Pf of the electromagnetic inverse-proportion valve 10 to be temporarily returned to an arbitrary level within a predetermined time, and subsequently causes the signal level of the secondary pressure Pf of the electromagnetic inverse-proportion valve 10 to be gradually returned by a number of increments of an arbitrary amount to the level equivalent to the maximum torque value Tmax according to the constant-torque control of the variable capacity hydraulic pump 2 when the engine speed of the engine 1 is within a predetermined engine speed to a target engine speed.

As described above, the over-loading prevention device of the embodiment of FIG. 4 is controlled so that the input torque T of the variable capacity hydraulic pump 2 does not exceed an engine torque, even if sudden actuation of the control lever 6 is performed and the discharge pressure P of the variable capacity hydraulic pump 2 is increased abruptly. Occurrence of an engine lag-down in which the engine speed of the engine 1 falls temporarily can be prevented and rapid increase of the fuel injection quantity of the engine 1 can be prevented. Therefore, the fuel consumption for all the construction operations in construction machinery can be reduced. Moreover, when the supercharged engine torque is set to a sufficiently large torque value, the discharge quantity of a hydraulic pump which is larger than in the case of the embodiment of FIG. 1 can be obtained. Thus, it is possible to make the acceleration of the hydraulic actuator responsive to operation.

In the example of FIG. 6, only the case in which the supercharging pressure is set to Ps1 is illustrated. However, the supercharging pressure value varies depending on the engine operations and the supercharged engine torque varies according to the supercharging pressure value. Accordingly, changes of the supercharging pressure Ps, the electromagnetic inverse-proportion valve secondary pressure Pf and the pump torque T are not limited to the example of FIG. 6. The controller 9 in this embodiment changes the secondary pressure Pf of the electromagnetic inverse-proportion valve 10 based on the detected supercharging pressure, and it is possible for the controller 9 in this embodiment to adjust the input torque of the hydraulic pump 2 to the optimal value for the engine torque at that time.

As described in the foregoing, according to the embodiment of FIG. 4, occurrence of an engine lag-down is prevented and unnecessary fuel injection is avoided, and it is possible to improve the fuel consumption of the engine. In addition, the discharge quantity of the hydraulic pump can be enlarged when the supercharged engine torque is sufficiently large, and it is possible to ensure that the acceleration of the hydraulic actuator is responsive to operation.

In the above-mentioned embodiment, the electromagnetic inverse-proportion valve is controlled by detection of sudden actuation of the control lever. Alternatively, the electromagnetic inverse-proportion valve may be controlled by detection of a sudden rise of the discharge pressure of the hydraulic pump. Moreover, in the above-mentioned embodiment, the electromagnetic inverse-proportion valve is provided as a specifically disclosed example. Alternatively, the same effects of the invention may be obtained even when any of electromagnetic proportional valves or other solenoid controlled valves is used.

The present invention is not limited to the above-described embodiments, and variations and modifications may be made without departing from the scope of the present invention as defined by the appended claims.

## Claims

1. An over-loading prevention device of construction machinery, comprising:
a hydraulic pump (2) which is adapted to be driven by an internal-combustion engine (1);
a control valve (4) which is adapted to control supply of hydraulic pressure from the hydraulic pump (2) to a hydraulic actuator and exhaust of hydraulic pressure from the hydraulic actuator;
a control lever (6) which is adapted to output a pilot pressure to operate the control valve (4);
a discharge-quantity control unit (7) which is adapted to perform constant-torque control which decreases a discharge quantity in proportion to an increase in a discharge pressure in the hydraulic pump (2) to control an input torque of the hydraulic pump (2) uniformly;
an operation-state detection unit (12) which is adapted to detect the pilot pressure output from the control lever (6) to determine an actuation speed of the control lever (6); and
a control unit (9) which is adapted to output a control signal that sets the input torque of the hydraulic pump (2) to a minimum torque value according to the constant-torque control, to the discharge-quantity control unit (7) when it is determined based on the actuation speed determined by the control unit (9) that the control lever (6) is operated over a predetermined speed, and subsequently the control unit (9) changing a level of the control signal to a maximum torque value according to the constant-torque control, in accordance with a predetermined control pattern to raise the input torque of the hydraulic pump (2).

2. The over-loading prevention device according to claim 1,
wherein the predetermined control pattern used by the control unit (9) is selected from among a first control pattern that causes the level of the control signal to be returned to a level equivalent to the maximum torque value within a predetermined time, a second control pattern that causes the level of the control signal to be gradually returned by a number of increments of an arbitrary amount to a level equivalent to the maximum torque value when an engine speed of the engine (1) is within a range of a given engine speed to a target engine speed, and a third control pattern that causes the level of the control signal to be temporarily returned to an arbitrary level within a predetermined time and subsequently causes the level of the control signal to be gradually returned by a number of increments of an arbitrary amount to a level equivalent to the maximum torque value when an engine speed of the engine (1) is within a range of a given engine speed to a target engine speed.

3. The over-loading prevention device according to claim 1,
wherein the hydraulic pump (2) is constituted by a variable capacity hydraulic pump, and the operation-state detection unit (12) is constituted by a pressure sensor connected to the control lever (6).

4. An over-loading prevention device of construction machinery, comprising:
a hydraulic pump (2) which is adapted to be driven by an internal-combustion engine (1) having a supercharger;
a control valve (4) which is adapted to control supply of hydraulic pressure from the hydraulic pump (2) to a hydraulic actuator and exhaust of hydraulic pressure from the hydraulic actuator;
a control lever (6) which is adapted to output a pilot pressure to operate the control valve(4);
a discharge-quantity control unit (7) which is adapted to perform constant-torque control which decreases a discharge quantity in proportion to an increase in a discharge pressure in the hydraulic pump (2) to control an input torque of the hydraulic pump (2) uniformly;
an operation-state detection unit (12) which is adapted to detect the pilot pressure output from the control lever (6) to determine an actuation speed of the control lever (6); a supercharging pressure detection unit (22) which is adapted to detect a supercharging pressure of the engine (1); and
a control unit (9) which is adapted to output a control signal that sets the input torque of the hydraulic pump (2) to a predetermined value, to the discharge-quantity control unit (7) when it is determined based on the actuation speed determined by the control unit (9) that the control lever (6) is operated over a predetermined speed,
the control unit (9) being adapted to change the predetermined value set by the control signal to an arbitrary value between a minimum torque value and a maximum torque value according to the constant-torque control according to a supercharged engine torque calculated beforehand based on the supercharging pressure of the engine (1) detected by the supercharging pressure detection unit (22).

5. The over-loading prevention device according to claim 4,
wherein the hydraulic pump (2) is constituted by a variable capacity hydraulic pump, the operation-state detection unit (12) is constituted by a pressure sensor connected to the control lever(6), and the supercharging pressure detection unit (22) is constituted by a pressure sensor attached to the engine (1).

## Patentansprüche

1. Überlastschutzvorrichtung für eine Baumaschine, die Folgendes aufweist:
eine Hydraulikpumpe (2), die geeignet ist, um von einem Verbrennungs-motor (1) angetrieben zu werden;
ein Steuerventil (4), welches geeignet ist, um eine Lieferung von Hydraulikdruck von der Hydraulikpumpe (2) zu einer hydraulischen Betätigungsvorrichtung zu steuern und die Abgabe von Hydraulikdruck aus der hydraulischen Betätigungsvorrichtung;
einen Steuerhebel (6), der geeignet ist, um einen Pilot- bzw. Vorsteuerdruck auszugeben, um das Steuerventil (4) zu betätigen;
eine Auslassmengensteuereinheit (7), die geeignet ist, um eine Steuerung mit konstantem Drehmoment auszuführen, welche eine Auslassmenge proportional zu einer Zunahme eines Auslassdrucks in der Hydraulikpumpe (2) verringert, um ein Eingangsdrehmoment der Hydraulikpumpe (2) gleichförmig zu steuern;
eine Betriebszustandsdetektionseinheit (12), die geeignet ist, um die Vorsteuerdruckausgabe vom Steuerhebel (6) zu detektieren, um eine Betätigungsgeschwindigkeit des Steuerhebels (6) zu bestimmen; und
eine Steuereinheit (9), die geeignet ist, um ein Steuersignal auszugeben, welches das Eingangsdrehmoment der Hydraulikpumpe (2) auf einen minimalen Drehmomentwert gemäß der Steuerung für konstantes Drehmoment einstellt, an die Auslassmengensteuereinheit (7) auszugeben, wenn basierend auf der Betätigungsgeschwindigkeit, die von der Steuereinheit (9) bestimmt wird, bestimmt wird, dass der Steuerhebel (6) über einer vorbestimmten Geschwindigkeit betätigt wird, und wobei darauf folgend die Steuereinheit (9) ein Niveau des Steuersignals auf einen maximalen Drehmomentwert gemäß der Steuerung für konstantes Drehmoment ändert, und zwar gemäß einem vorbestimmten Steuermuster, um das Eingangsdrehmoment der Hydraulikpumpe (2) zu vergrößern.

2. Überlastschutzvorrichtung nach Anspruch 1, wobei das vorbestimmte Steuermuster, welches von der Steuereinheit (9) verwendet wird, ausgewählt wird aus einem ersten Steuermuster, welches bewirkt, dass das Niveau des Steuersignals innerhalb einer vorbestimmten Zeit auf ein Niveau zurückgebracht wird, welches dem maximalen Drehmomentwert äquivalent ist, einem zweiten Steuermuster, welches bewirkt, dass das Niveau des Steuersignals allmählich durch einen Anzahl von Schritten von beliebiger Größe auf ein Niveau zurückgebracht wird, welches dem maximalen Drehmomentwert äquivalent ist, wenn die Motordrehzahl des Motors (1) innerhalb eines Bereiches einer gegebenen Motordrehzahl bis zu einer Ziel- bzw. Soll-Motordrehzahl ist, und einem dritten Steuermuster, welches bewirkt, dass das Niveau des Steuersignals innerhalb einer vorbestimmten Zeit temporär auf ein beliebiges Niveau zurückgebracht wird und darauf folgend bewirkt, dass das Niveau des Steuersignals allmählich um eine Anzahl von Schritten von beliebiger Größe auf ein Niveau zurückgebracht wird, welches dem maximalen Drehmomentwert äquivalent ist, wenn eine Motordrehzahl des Motors (1) innerhalb eines Bereichs einer gegebenen Motordrehzahl bis zu einer Ziel-Motordrehzahl ist.

3. Überlastschutzvorrichtung nach Anspruch 1, wobei die Hydraulikpumpe (2) durch eine Hydraulikpumpe mit variabler Kapazität gebildet wird, und wobei die Betriebszustandsdetektionseinheit (12) durch einen Drucksensor gebildet wird, der mit dem Steuerhebel (6) verbunden ist.

4. Überlastschutzvorrichtung für eine Baumaschine, die Folgendes aufweist:
eine Hydraulikpumpe (2), die geeignet ist, um von einem Verbrennungsmotor (1) mit einem Lader angetrieben zu werden;
ein Steuerventil (4), welches geeignet ist, um eine Lieferung von Hydraulikdruck von der Hydraulikpumpe (2) zu einer hydraulischen Betätigungsvorrichtung und das Freigeben von Hydraulikdruck aus der hydraulischen Betätigungsvorrichtung zu steuern;
einen Steuerhebel (6), der geeignet ist, um einen Pilot- bzw. Vorsteuerdruck auszugeben, um das Steuerventil (4) zu betätigen;
eine Auslassmengensteuereinheit (7), die geeignet ist, um eine Steuerung für konstantes Drehmoment auszuführen, welche eine Auslassmenge proportional zu einer Zunahme eines Auslassdruckes bei der Hydraulikpumpe (2) verringert, um ein Eingangsdrehmoment der Hydraulikpumpe (2) gleichförmig zu steuern;
eine Betriebszustandsdetektionseinheit (12), welche geeignet ist, um die Vorsteuerdruckausgabe aus dem Steuerhebel (6) zu detektieren, um eine Betätigungsgeschwindigkeit des Steuerhebels (6) zu bestimmen; eine Ladedruckdetektionseinheit (22), die geeignet ist, um einen Ladedruck des Motors (1) zu detektieren; und
eine Steuereinheit (9), die geeignet ist, um ein Steuersignal, welches das Eingangsdrehmoment der Hydraulikpumpe (2) auf einen vorbestimmten Wert einstellt, an die Auslassmengensteuereinheit (7) auszugeben, wenn basierend auf der Betätigungsgeschwindigkeit, die von der Steuereinheit (9) bestimmt wird, bestimmt wird, dass der Steuerhebel (6) mit mehr als einer vorbestimmten Geschwindigkeit betätigt wird,
wobei die Steuereinheit (9) geeignet ist, um den vorbestimmten Wert, der von dem Steuersignal eingestellt wird, auf einen beliebigen Wert zwischen einem minimalen Drehmomentwert und einem maximalen Drehmomentwert gemäß der Steuerung für konstantes Drehmoment zu verändern, und zwar gemäß einem Drehmoment des aufgeladenen Motors, welches zuvor basierend auf dem Ladedruck des Motors (1) berechnet wurde, der von der Ladedruckdetektionseinheit (22) detektiert wird.

5. Überlastschutzvorrichtung nach Anspruch 4, wobei die Hydraulikpumpe (2) von einer Hydraulikpumpe mit variabler Kapazität gebildet wird, wobei die Betriebszustandsdetektionseinheit (12) durch einen Drucksensor gebildet wird, der mit dem Steuerhebel (6) verbunden ist und wobei die Ladedruckdetektionseinheit (22) durch einen Drucksensor gebildet wird, der am Motor (1) angebracht ist.

## Revendications

1. Dispositif de prévention de surcharge pour un engin de travaux, comprenant :
une pompe hydraulique (2) adaptée à être entraînée par un moteur à combustion interne (1) ;
une soupape de commande (4) adaptée à contrôler la fourniture de pression hydraulique à partir de la pompe hydraulique (2) à un actionneur hydraulique et l'échappement de la pression hydraulique de l'actionneur hydraulique ;
un levier de commande (6) adapté à produire une pression pilote pour actionner la soupape de commande (4) ;
un module de commande de quantité de refoulement (7) adapté à réaliser une commande de couple constant qui diminue une quantité de refoulement en proportion de l'augmentation d'une pression de refoulement dans la pompe hydraulique (2) pour commander un couple d'entrée de la pompe hydraulique (2) de façon uniforme ;
un module de détection d'état de fonctionnement (12) adapté à détecter la pression pilote fournie par le levier de commande (6) pour déterminer une vitesse d'actionnement du levier de commande (6) ; et
une unité de commande (9) adaptée à fournir un signal de commande, qui règle le couple d'entrée de la pompe hydraulique (2) à une valeur de couple minimum conformément à la commande de couple constant, au module de commande de quantité de refoulement (7) lorsqu'on détermine sur la base de la vitesse d'actionnement déterminée par le module de commande (9) que le levier de commande (6) est actionné au-dessus d'une vitesse prédéterminée, et ensuite l'unité de commande (9) changeant le niveau du signal de commande pour prendre une valeur de couple maximum conformément à la commande de couple constant, conformément à un modèle de commande prédéterminé pour augmenter le couple d'entrée de la pompe hydraulique (2).

2. Dispositif de prévention de surcharge selon la revendication 1, dans lequel le modèle de commande prédéterminé utilisé par le module de commande (9) est sélectionné parmi un premier modèle de commande qui amène le levier du signal de commande à revenir à un niveau équivalent à la valeur de couple maximum dans un temps prédéterminé, un deuxième modèle de commande qui amène le niveau du signal de commande à revenir graduellement, par un nombre d'incréments d'une quantité arbitraire, jusqu'à un niveau équivalent à la valeur de couple maximum lorsque la vitesse du moteur (1) est dans une plage allant d'une vitesse de moteur donnée à une vitesse de moteur cible, et un troisième modèle de commande qui amène le levier du signal de commande à revenir de façon temporaire à un niveau arbitraire dans un temps prédéterminé et ensuite amène le niveau du signal de commande à revenir graduellement, par un nombre d'incréments d'une quantité arbitraire, à un niveau équivalent à la valeur de couple maximum lorsque la vitesse du moteur (1) est dans une plage allant d'une vitesse de moteur donnée à une vitesse de moteur cible.

3. Dispositif de prévention de surcharge selon la revendication 1, dans lequel la pompe hydraulique (2) est constituée d'une pompe hydraulique à capacité variable, et le module de détection d'état de fonctionnement (12) est constitué d'un capteur de pression connecté au levier de commande (6).

4. Dispositif de prévention de surcharge d'un engin de travaux, comprenant :
une pompe hydraulique (2) adaptée à être entraînée par un moteur à combustion interne (1) ; i
une soupape de commande (4) adaptée à contrôler la fourniture de pression hydraulique à partir de la pompe hydraulique (2) à un actionneur hydraulique et l'échappement de la pression hydraulique de l'actionneur hydraulique ;
un levier de commande (6) adapté à produire une pression pilote pour actionner la soupape de commande (4) ;
un module de commande de quantité de refoulement (7) adapté à réaliser une commande de couple constant qui diminue une quantité de refoulement en proportion de l'augmentation d'une pression de refoulement dans la pompe hydraulique (2) pour commander un couple d'entrée de la pompe hydraulique (2) de façon uniforme ;
un module de détection d'état de fonctionnement (12) adapté à détecter la pression pilote fournie par le levier de commande (6) pour déterminer une vitesse d'actionnement du levier de commande (6) ;
un module de détection de pression de suralimentation (22) adapté à détecter une pression de suralimentation du moteur (1) ; et
un module de commande (9) adapté à fournir un signal de commande, qui règle le couple d'entrée de la pompe hydraulique (2) à une valeur prédéterminée, au module de commande de quantité de refoulement (7) lorsqu'on détermine, sur la base de la vitesse d'actionnement déterminée par le module de commande (9), que le levier de commande (6) est actionné au-dessus d'une vitesse prédéterminée,
le module de commande (9) étant adapté à changer la valeur prédéterminée réglée par le signal de commande à une valeur arbitraire entre une valeur de couple minimum et une valeur de couple maximum conformément à la commande de couple constant en fonction d'un couple de moteur suralimenté calculé au préalable sur la base de la pression de suralimentation du moteur (1) détectée par le module de détection de pression de suralimentation (22).

5. Dispositif de prévention de surcharge selon la revendication 4, dans lequel la pompe hydraulique (2) est constituée d'une pompe hydraulique à capacité variable, le module de détection d'état de fonctionnement (12) est constitué d'un capteur de pression connecté au levier de commande (6), et le module de détection de pression de suralimentation (22) est constitué d'un capteur de pression fixé au moteur (1).
